# EUROPÄISCHE PATENTSCHRIFT

(11) **EP 1 099 127 B1**
(45) Veröffentlichungstag und Bekanntmachung des Hinweises auf die Patenterteilung: **09.07.2008**
(21) Anmeldenummer: 00929403.4
(22) Anmeldetag: 20.04.2000
(51) Int. Cl.: G02B 5/04, F21V 5/02

(54) **OPTISCHES ELEMENT MIT MIKROPRISMENSTRUKTUR ZUR UMLENKUNG VON LICHTSTRAHLEN**
OPTICAL ELEMENT WITH A MICROPRISM STRUCTURE FOR DEVIATING LIGHT RAYS
ELEMENT OPTIQUE AYANT UNE STRUCTURE DE MICROPRISMES AUX FINS DE DEVIATION DE RAYONS LUMINEUX

(30) Priorität: 20.05.1999 DE 19923226
(43) Veröffentlichungstag der Anmeldung: 16.05.2001
(73) Patentinhaber: Zumtobel Lighting GmbH, 6850 Dornbirn (AT)
(72) Erfinder: SEJKORA, Günther, A-6867 Schwarzenberg (AT)
(74) Vertreter: Schmidt-Evers, Jürgen
(86) Internationale Anmeldenummer: PCT/EP2000/003609
(87) Internationale Veröffentlichungsnummer: WO 2000/072054

(56) Entgegenhaltungen:
- WO-A-97/36131
- AT-B- 403 403
- GB-A- 1 266 129
- US-A- 3 760 178
- US-A- 5 521 725
- US-A- 5 598 281

## Beschreibung

Die vorliegende Erfindung betrifft ein optisches Element mit Mikroprismenstruktur, insbesondere zur Verwendung als Leuchtenabdeckung nach dem Oberbegriff von Patentanspruch 1, sowie ein Verfahren zur Herstellung desselben gemäß Patentanspruch 8.

Durch derartige optische Elemente bzw. Leuchtenabdeckungen soll erreicht werden, daß der Austrittswinkel von Lichtstrahlen beispielsweise aus einer Leuchte begrenzt wird, um eine Blendung für den Betrachter zu vermeiden bzw. zumindest zu verringern. Darüber hinaus bewirkt ein solches Element natürlich auch einen mechanischen Schutz für die Leuchte und insbesondere die Lichtquelle im Innern der Leuchte.

Ein optisches Element der eingangs genannten Art ist beispielsweise aus dem österreichischen Patent AT-B-403,403 bekannt. Das bekannte, als Leuchtenabdeckung eingesetzte optische Element weist auf seiner der Lampe zugewandten Seite in Reihen und Zeilen angeordnete pyramidenartige Profilierungen, sogenannte Mikroprismen auf, die als Pyramidenstümpfe ausgebildet sind und eine parallel zur Basisfläche (Lichtaustrittsfläche) liegende obere Begrenzungsfläche (Lichteintrittsfläche) aufweisen. Die gesamte Leuchtenabdeckung besteht vollständig aus einem glasklaren bzw. transparenten Material.

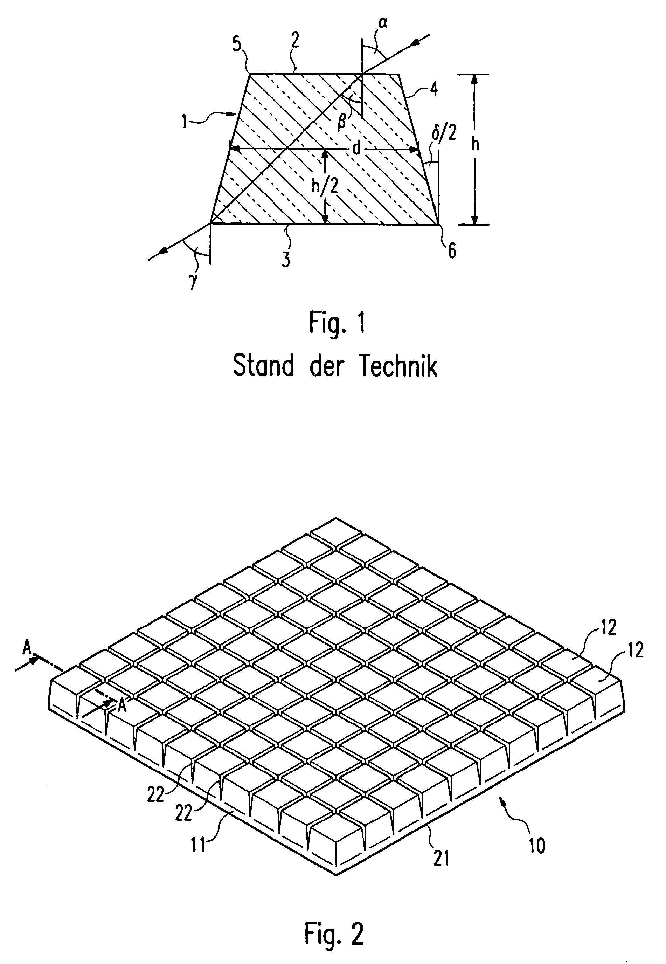

Ein Pyramidenstumpf bzw. Mikroprisma gemäß der AT-B-403,403 ist zur Erläuterung der der vorliegenden Erfindung zugrundeliegenden Problemstellung in Fig. 1 dargestellt. Wie in der Patentschrift näher beschrieben, weist das bekannte Mikroprisma 1 eine als Lichteintrittsfläche dienende Deckfläche 2, eine parallel zu dieser angeordnete und als Lichtaustrittsfläche dienende Wurzel 3 und schräg verlaufende Seitenwände 4 derart auf, daß das Mikroprisma 1 die Form eines Pyramidenstumpfes annimmt. Der Austrittswinkel γ der austretenden Lichtstrahlen bezüglich des Lotes auf die Lichtaustrittsfläche 3 soll höchstens etwa γₘₐₓ ≈ 60-70°, vorzugsweise γₘₐₓ ≈ 60°, betragen, um eine Blendung des Betrachters bei seitlicher Betrachtung der Leuchte zu vermeiden. Um gleichzeitig einen möglichst hohen optischen Wirkungsgrad zu erzielen, ergibt sich für das Mikroprisma 1 aus transparentem Material ein optimales Verhältnis der Abmessungen des Pyramidenstumpfes d:h, das von der Brechzahl n des Materials des Pyramidenstumpfes abhängt. Ferner ergibt sich auch ein optimaler Furchenwinkel δ zwischen benachbarten Mikroprismen 1 von etwa 8-9° bei einem Rastermaß der Mikroprismen von etwa 700 µm.

Bei den vorstehend genannten Parametern wird auch für solche Lichtstrahlen, die direkt auf die Kanten 5 oder unmittelbar neben die Kanten 5 des Pyramidenstumpfes 1 treffen und gerade noch an den Kanten 6 zwischen den Pyramidenstümpfen 1 vorbeigehen, erreicht, daß sie aus der Ebene der Lichtaustrittsfläche 3 mit einem Austrittswinkel von γ < 60° austreten.

Es hat sich aber in der Praxis herausgestellt, daß es fertigungstechnisch äußerst schwierig oder nahezu unmöglich ist, einen Furchenwinkel δ von etwa 8-9° einzuhalten. Derzeit können Furchenwinkel δ von etwa 15° mit einer ausreichend hohen Genauigkeit und Reproduzierbarkeit realisiert werden. Es kann zwar auch bei einem realistischen Furchenwinkel δ ≈ 15° ein Austrittswinkel von γₘₐₓ ≈ 60° erzielt werden; dies hat allerdings bei einer gleichbleibenden Höhe h des Pyramidenstumpfes 1 zur Folge, daß aufgrund der dadurch verringerten Fläche der Lichteintrittsfläche 2 der optische Wirkungsgrad der Leuchtenabdeckung entsprechend von etwa 75-80% auf etwa 65% reduziert wird. Alternativ könnte zur Beibehaltung der Ausdehnung der Lichteintrittsfläche 2 auch die Höhe h des Pyramidenstumpfes 1 verringert werden. In diesem Fall würde jedoch der maximale Lichtaustrittswinkel γₘₐₓ ≈ 60° nicht mehr eingehalten werden, da Lichtstrahlen, die direkt an den Kanten 5 der Lichteintrittsflächen 2 in das Mikroprisma 1 eintreten und gerade noch an den Kanten 6 zwischen benachbarten Pyramidenstümpfen 1 vorbeigehen, die Leuchtenabdeckung flacher verlassen.

Eine weitere Leuchtenabdeckung bzw. ein weiteres optisches Element der eingangs genannten Art ist beispielsweise aus der WO 97/36131 bekannt. Die in dieser Druckschrift offenbarte Mikroprismenstruktur weist einerseits an den Seitenwänden der Pyramidenstümpfe eine reflektierende Abdeckung zum Verhindern, daß Licht aus den Seitenwänden der Mikroprismen austritt und den Wirkungsgrad der Leuchtenanordnung verringert, und andererseits auf der Seite der Lichtaustrittsflächen der Mikroprismen ein Linsensystem zum Bündeln der Lichtstrahlen in eine Richtung etwa senkrecht zu der Ebene der Lichtaustrittsfläche auf. Der Aufbau dieser Leuchtenabdeckung ist im Vergleich zu der aus der AT-B-403,403 bekannten Leuchtenabdeckung aber relativ kompliziert und deshalb fertigungstechnisch aufwendiger.

Ausgehend von dem vorgenannten Stand der Technik ist es eine Aufgabe der vorliegenden Erfindung, ein optisches Element der eingangs genannten Art bereitzustellen, das die oben beim Stand der Technik beschriebenen Nachteile vermeidet und insbesondere bei einem hohen lichttechnischen Wirkungsgrad einen Austrittswinkel der Lichtstrahlen aus dem optischen Element gewährleistet, bei dem eine Blendung des Betrachters vermieden wird.

Diese Aufgabe wird durch ein optisches Element mit den Merkmalen des Anspruchs 1 gelöst.

Dadurch, daß die durch die Mikroprismen-Deckflächen gebildete Lichteintrittsfläche des optischen Elements in stetiger oder nicht-stetiger Form konvex oder konkav ausgebildet sind, treffen die von einer Lampe kommenden Lichtstrahlen unter einem anderen Einfallswinkel auf die Lichteintrittsfläche des Elements als bei einer zu der Lichtaustrittsfläche parallel ausgerichteten Lichteintrittsfläche. Durch eine geeignete Wahl der Wölbung bzw. des Wölbungsgrades, die bzw. der im übrigen auch von dem Material des Elementenkerns und insbesondere dessen Brechzahl abhängt, wird erreicht, daß die Lichtstrahlen nur unter einem Austrittswinkel von höchstens etwa 60° zum Lot der Lichtaustrittsfläche aus der Lichtaustrittsfläche austreten können, ohne daß hierdurch der lichttechnische Wirkungsgrad des optischen Elements verringert wird. Eine konkave Ausbildung der Mikroprismen-Deckflächen bewirkt, daß die auf die Deckflächen auftreffenden Lichtstrahlen unter steileren Winkeln in die Mikroprismenstruktur gebrochen werden und das optische Element nicht unter einem zu flachen Winkel verlassen. Eine konvexe Ausbildung der Mikroprismen-Deckflächen bewirkt hingegen, daß die auf die Deckflächen unter einem flachen Winkel auftreffenden Lichtstrahlen unter flacheren Winkeln in die Mikroprismenstruktur gebrochen werden, deshalb an der gegenüberliegenden Strukturflanke totalreflektiert werden und das optische Element mit einem ausreichend kleinen Austrittswinkel verlassen.

Die Ausbildung der Mikroprismen-Deckflächen wird vorzugsweise durch eine konvexe oder konkave Krümmung oder Stufung realisiert, wobei sich die Krümmung oder Stufung nicht notwendigerweise über die gesamte Deckflächen erstrecken muß.

Der plattenförmige Kern des optischen Elements wird gemäß der vorliegenden Erfindung entweder aus einem transparenten Block mechanisch herausgearbeitet oder durch Eingießen oder Einspritzen des transparenten Materials in eine entsprechende Form und anschließender Beaufschlagung mit Druck hergestellt.

Weitere vorteilhafte Ausgestaltungen und Weiterbildungen der vorliegenden Erfindung sind Gegenstand weiterer Unteransprüche.

Verschiedene bevorzugte Ausführungsbeispiele der vorliegenden Erfindung werden nachfolgend anhand der beiliegenden Zeichnung näher erläutert. Darin zeigen:
- Fig. 1: eine aus dem Stand der Technik bekannte Mikroprismenstruktur einer Leuchtenabdeckung im Schnitt;
- Fig. 2: eine schematische perspektivische Darstellung eines ersten Ausführungsbeispiels eines erfindungsgemäßen optischen Elements;
- Fig. 3: eine schematische perspektivische Darstellung eines zweiten Ausführungsbeispiels eines erfindungsgemäßen optischen Elements;
- Fig. 4: eine schematische perspektivische Darstellung eines dritten Ausführungsbeispiels eines erfindungsgemäßen optischen Elements;
- Fig. 5: ein erstes Ausführungsbeispiel einer Mikroprismenstruktur gemäß der vorliegenden Erfindung im Schnitt gemäß der Linie A-A von Fig. 2 bzw. 4;
- Fig. 6: ein zweites Ausführungsbeispiel einer Mikroprismenstruktur gemäß der vorliegenden Erfindung im Schnitt;
- Fig. 7: ein drittes Ausführungsbeispiel einer Mikroprismenstruktur gemäß der vorliegenden Erfindung im Schnitt;
- Fig.8: ein viertes Ausführungsbeispiel einer Mikroprismenstruktur gemäß der vorliegenden Erfindung im Schnitt;
- Fig. 9: ein fünftes Ausführungsbeispiel einer Mikroprismenstruktur gemäß der vorliegenden Erfindung im Schnitt;
- Fig. 10: ein sechstes Ausführungsbeispiel einer Mikroprismenstruktur gemäß der vorliegenden Erfindung im Schnitt;
- Fig. 11A: eine Darstellung des Verlaufes eines Lichtstrahles durch ein herkömmliches optisches Element; und
- Fig. 11B: eine Darstellung des Verlaufes mehrerer beispielhafter Lichtstrahlen durch ein optisches Element gemäß der vorliegenden Erfindung.

Die Fig. 2 bis 4 zeigen in einer perspektivischen Darstellung drei unterschiedliche, beispielsweise als Leuchtenabdeckungen eingesetzte optische Elemente 10, 10' bzw. 10" von der der Lampe (nicht gezeigt) der Leuchte zugewandten Seite. Die optischen Elemente 10, 10', 10" bestehen aus einem lichtdurchlässigen bzw. transparenten Material, wie transparenten Kunststoffen, wie beispielsweise Acrylglas. Die optischen Elemente 10, 10', 10" bestehen jeweils aus einem plattenförmigen Kern 11, 11' bzw. 11" aus transparentem Material, der an einer Seite mit einer Vielzahl von Mikroprismen 12, 13 besetzt ist. Die Mikroprismen 12, 13 sind dabei derart ausgebildet, daß sie sich unter Bildung von Furchen 22 - von ihren Wurzeln 15 ausgehend - verjüngen. Die Gesamtheit der Deckflächen 14 der Mikroprismen 12, 13 bildet dabei die Lichteintrittsfläche des optischen Elements und die andere Seite 21 des Kerns die Lichtaustrittsfläche des optischen Elements.

Der Elementenkern 11, 11', 11" des erfindungsgemäßen optischen Elements 10, 10', 10" kann auf verschiedene Weise aus einem transparenten Material, vorzugsweise einem transparenten Kunststoffmaterial, wie Acrylglas, hergestellt werden. Als erstes ist hier die Herstellung mittels eines sogenannten Spritz-Prägeverfahrens zu nennen. Dieses Verfahren ist ähnlich dem allgemein bekannten Kunststoffspritzen, erfolgt aber mit einem relativ geringen Spritzdruck. Nach dem Einspritzen des transparenten Materials in die Form wird ein mechanischer Druck auf das noch flüssige Material ausgeübt, so daß dieses in die Strukturen der Form eindringen kann. Weiter ist die Herstellung des Elementenkerns 1 auch mittels eines Heißprägeverfahrens möglich, bei dem das transparente Material in flüssiger Form in eine entsprechende Form eingegossen und anschließend ebenfalls mit Druck beaufschlagt wird, um die Prägung zu erzielen.

Ferner besteht auch die Möglichkeit, einen transparenten Kunststoffblock mechanisch mit den Furchen zu versehen. Dies kann beispielsweise spanabhebend, z.B. mit einem Diamantfräser, oder mittels eines Laserstrahles erfolgen.

Eine weitere Möglichkeit zur Herstellung des transparenten Kerns 11, 11', 11" besteht darin, den flüssigen Kunststoff durch einen Extrusionskopf zu drücken. Hierbei können allerdings nur lineare Strukturen von Mikroprismen 13 erzeugt werden.

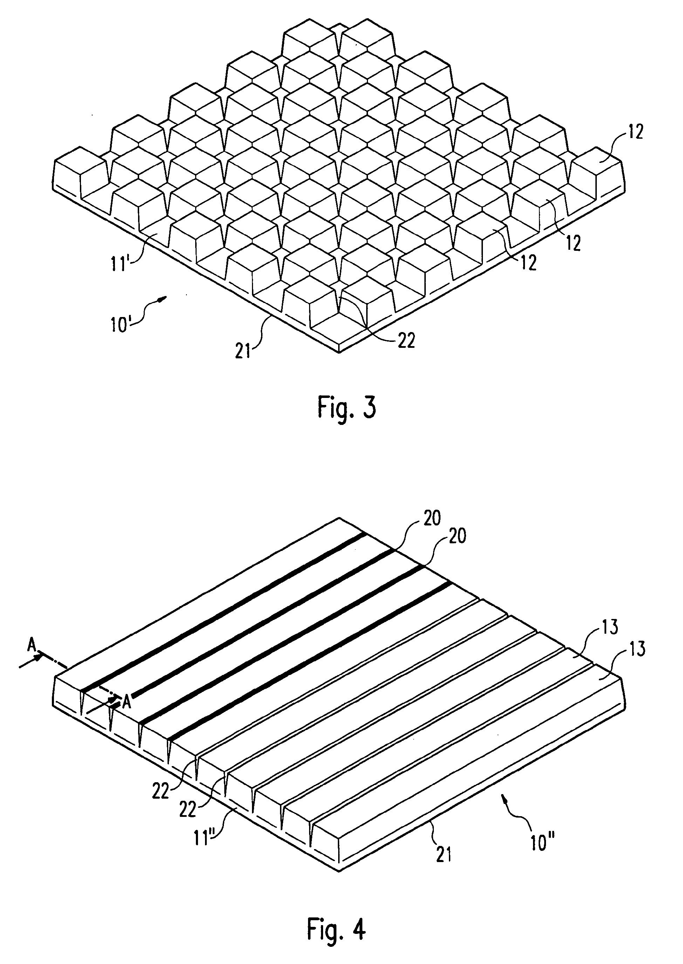

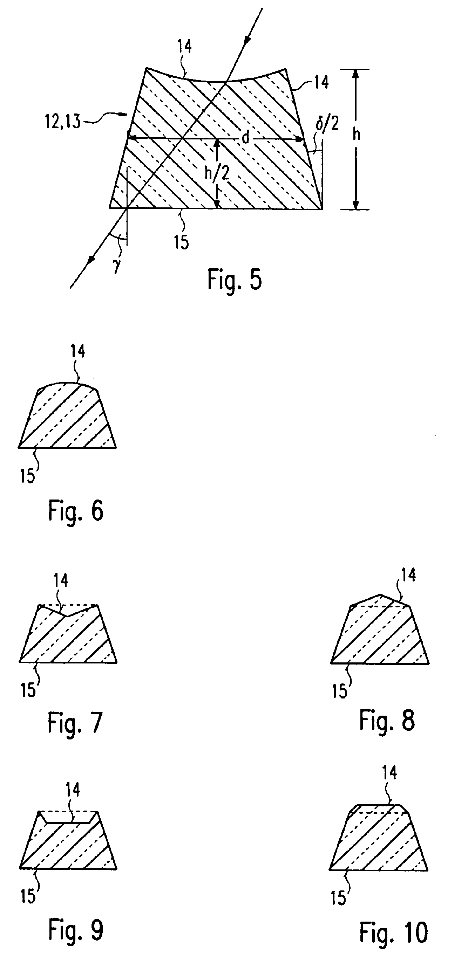

In dem ersten Ausführungsbeispiel von Fig. 2 weist das optische Element 10 auf der der Lampe der Leuchte zugewandten Seite in Zeilen und Reihen angeordnete Profilierungen in Form von Mikroprismen 12 jeweils gleicher Abmessung und quadratischer Basis auf. Die Mikroprismen 12 sind in Fig. 2, wie im übrigen auch in den Fig. 3 und 4, nur schematisch dargestellt, ihre Form entspricht beispielsweise einem der in den Fig. 5-10 gezeigten und weiter unten beschriebenen Ausführungsbeispiele. Durch die matrixartige Anordnung der Mikroprismen 12 des ersten Ausführungsbeispiels des optischen Elements wird eine Querentblendung in beide Richtungen erzielt.

Während in dem ersten Ausführungsbeispiel des optischen Elements 10 die Mikroprismen 12 in Reihen und Zeilen unmittelbar aufeinander folgen, sind die Mikroprismen 12 in dem in Fig. 3 gezeigten zweiten Ausführungsbeispiel des optischen Elements 10' schachbrettartig angeordnet, d.h. zwischen zwei aufeinander folgenden Mikroprismen 12 ist jeweils in Zeilen- und in Reihenrichtung eine Mikroprismenstruktur ausgespart, wobei die ausgesparte Fläche hinsichtlich ihrer Länge und Breite der Basisfläche eines Mikroprismas 12 entspricht. Die Mikroprismen haben auch in diesem zweiten Ausführungsbeispiel vorzugsweise eine quadratische Basisfläche. Es ist aber sowohl im Falle des ersten als auch des zweiten Ausführungsbeispiels möglich, als Basisfläche ein anderes, vorzugsweise regelmäßiges, Vieleck vorzusehen.

Das dritte Ausführungsbeispiel des optischen Elements 10" gemäß Fig. 4 unterscheidet sich von den beiden oben beschriebenen Ausführungsbeispielen dadurch, daß sich die Mikroprismen 13 des optischen Elements 10" in einer Richtung, zum Beispiel der Zeilenrichtung, über die gesamte Länge des optischen Elements 10" erstrecken, während sie in der anderen Richtung, zum Beispiel der Reihenrichtung, wie bei den optischen Elementen 10, 10' der Fig. 2 und 3 aufeinander folgend angeordnet sind. Analog zu dem zweiten Ausführungsbeispiel ist es auch hier denkbar, jeweils eine Reihe zwischen zwei Mikroprismenstrukturen 13 auszusparen.

Durch die sich linear erstreckenden Mikroprismen 13 wird eine Querentblendung nur senkrecht zur Erstreckungsrichtung der Mikroprismen 13 erreicht. Das optische Element 10" gemäß dem dritten Ausführungsbeispiel eignet sich deshalb insbesondere für Leuchten, in denen längliche Lampen, wie beispielsweise Leuchtstoffröhren, eingesetzt sind. Die Längsrichtung der Lampe verläuft dabei parallel zu der Erstreckungsrichtung der linearen Mikroprismen 13.

Wie in Fig. 4 außerdem angedeutet, sind die Zwischenräume zwischen den angrenzenden Mikroprismen 13 vorzugsweise mit einem reflektierenden Material 20, beispielsweise einer Metallfolie mit hohem Reflexionsvermögen, abgedeckt. Hierdurch wird erreicht, daß nur das Licht, das von der Lampe auf die die Lichteintrittsfläche bildenden Deckflächen 14 der Mikroprismen 13 trifft, durch das optische Element 10" abgestrahlt wird. Die auf die Abdeckung 20 auftreffenden Lichtstrahlen werden in das Innere der Leuchte zurück reflektiert und von einem in üblicher Weise hinter der Lampe angeordneten Reflektor wieder in Richtung auf das optische Element reflektiert.

Durch eine derartige reflektierende Abdeckung 20 kann der Wirkungsgrad des optischen Elements weiter erhöht werden. Anstelle der in Fig. 4 teilweise gezeigten Abdeckung 20 ist es auch möglich, die Zwischenräume bzw. Furchen 22 zwischen den Mikroprismen 13 vollständig mit einem reflektierenden Material zu füllen. In dieser Weise werden auch die Seitenwände 16 der Mikroprismen 13 total reflektierend ausgebildet, so daß Lichtstrahlen, die von innen auf diese Seitenwände 16 auftreffen, die Mikroprismen 13 nicht verlassen können. Alternativ hierzu können die Seitenwände 16 der Mikroprismen 13 auch mit einem reflektierenden Material beschichtet oder in anderen Art und Weise reflektierend ausgebildet sein.

Die hier am Beispiel des optischen Elements 10" von Fig. 4 genannten Maßnahmen finden selbstverständlich ebenfalls bei den ersten beiden Ausführungsbeispielen der Fig. 2 und 3 in analoger Weise Anwendung.

In den Fig. 5 bis 10 sind nun unterschiedliche Ausführungsbeispiele von Mikroprismen 12, 13 im Schnitt gemäß Linie A-A von Fig. 2 bzw. Fig. 4 dargestellt. Die nachfolgend beschriebenen Mikroprismen 12, 13 können wahlweise in den optischen Elementen 10, 10', 10" der Fig. 2 bis 4 eingesetzt werden.

Die in Fig. 5 im Schnitt dargestellte Mikroprismenstruktur 12, 13 weist eine Wurzel 15, die im wesentlichen die Lichtaustrittsfläche 21 des optischen Elements bildet, und eine im wesentlichen parallel zu dieser angeordnete, die Lichteintrittsfläche bildende Deckfläche 14 auf. Die Seitenflächen 16 des Mikroprismas 12, 13 verlaufen leicht nach innen geneigt von der Wurzel 15 zu der Deckfläche 14, so daß sich die sich nach außen verjüngende Struktur ergibt. Dieser Neigungswinkel δ/2 der Seitenflächen 16 bestimmt den Furchenwinkel δ zwischen angrenzenden Mikroprismen 12, 13 des optischen Elements 10, 10". Das Mikroprisma 12, 13 hat vorzugsweise eine quadratische bzw. rechteckige Form, kann aber ebenso ein beliebiges anderes, vorzugsweise regelmäßiges, Vieleck sein.

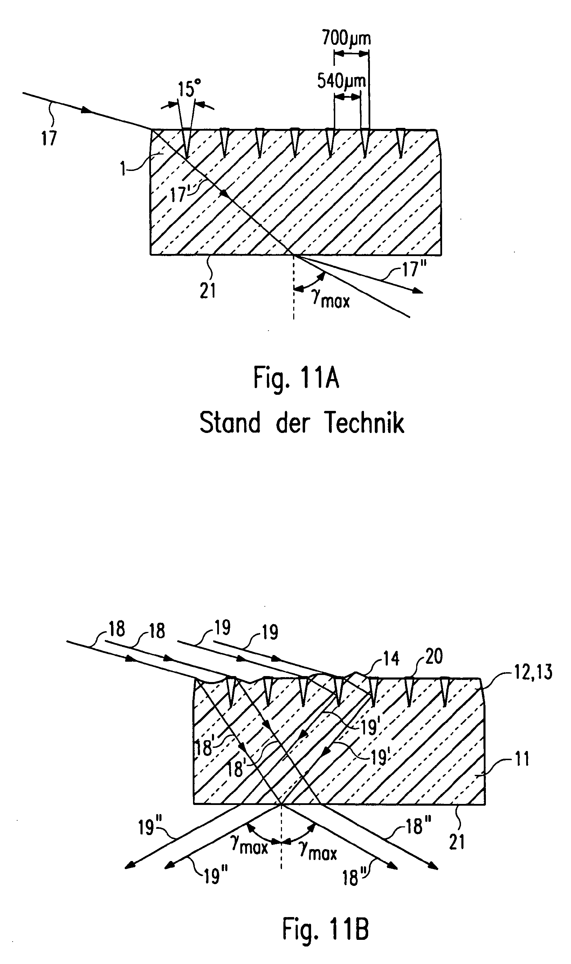

Die Lichteintrittsfläche 14 des Mikroprismas 12, 13 ist im vorliegenden ersten Ausführungsbeispiel von Fig. 5 konkav, d.h. nach innen gekrümmt. Der Grad der erforderlichen Krümmung hängt von den Abmessungen des Mikroprismas 12, 13, genauer gesagt von dem Verhältnis d:h, und von der Brechzahl n des transparenten Materials des Mikroprismas 12, 13 ab. Der Fachmann auf dem Gebiet der Optik wird jedoch ohne weiteres den im Einzelfall erforderlichen Wölbungsgrad der Lichteintrittsfläche 14 bestimmen können, um einen maximalen Lichtaustrittswinkel γₘₐₓ von etwa 60-70° zu erzielen. Der Effekt der gekrümmten Lichteintrittsfläche 14 wird weiter unten anhand der Fig. 11A und B näher beschrieben.

Das in Fig. 6 gezeigte zweite Ausführungsbeispiel des Mikroprismas 12, 13 unterscheidet sich von dem oben beschriebenen ersten Ausführungsbeispiel dadurch, daß die Lichteintrittsfläche 14 konvex, d.h. nach außen gekrümmt ist.

Anstelle einer konkav oder konvex gekrümmten Lichteintrittsfläche 14 ist es ebenso möglich, eine stufen- oder kantenförmige Lichteintrittsfläche 14 vorzusehen, wie dies in den Ausführungsbeispielen der Fig. 7 bis 10 dargestellt ist.

Im Falle der beiden Ausführungsbeispiele von Fig. 7 und 8 setzt sich die Lichteintrittsfläche 14 aus Teilflächen zusammen, die in der Mitte der Lichteintrittsfläche 14 unterhalb bzw. oberhalb der (gedachten) Ebene der Lichteintrittsfläche zusammenlaufen und so eine eingesenkte bzw. erhabene Struktur ausbilden. Bei einer quadratischen Basisfläche des Mikroprismas 12 beispielsweise sind diese Teilflächen der Lichteintrittsfläche 14 dreieckförmig.

In dem fünften und dem sechsten Ausführungsbeispiel der Fig. 9 bzw. 10 setzt sich die Lichteintrittsfläche 14 ebenfalls aus mehreren Teilflächen zusammen. Eine Teilfläche ist parallel zu der Lichtaustrittsfläche 15 und der (gedachten) Ebene der Lichteintrittsfläche 14 etwa in der Mitte der Lichteintrittsfläche 14 und unterhalb bzw. oberhalb der (gedachten) Ebene der Lichteintrittsfläche 14 angeordnet. Die übrigen Teilflächen verbinden diese mittlere Teilfläche mit den Seitenwänden 16 des Mikroprismas 12, 13.

Selbstverständlich können im Rahmen der vorliegenden Erfindung auch Kombinationen der oben anhand der Fig. 5 bis 10 beschriebenen Ausführungsformen des Mikroprismas und auch weitere ähnliche Ausgestaltungen ausgewählt werden. Hierbei sind die Deckflächen 14 entweder stetig oder nicht-stetig konkav oder konvex ausgebildet, d.h. immer zumindest in einem Teilbereich der Deckflächen 14 konkav oder konvex.

Anhand der Fig. 11A und B wird nun der Effekt der erfindungsgemäßen Ausgestaltung der Mikroprismenstruktur 12, 13 auf die Wirkungsweise des optischen Elements 10, 10', 10" im Vergleich zu einer herkömmlichen Mikroprismenstruktur 12, 13 erläutert.

In Fig. 11A ist zunächst ein herkömmliches optisches Element im Schnitt gezeigt. Der Furchenwinkel δ zwischen benachbarten Mikroprismen 1 beträgt etwa 15°, das Rastermaß d der Mikroprismen 1 beträgt etwa 700 µm und die Breite der Lichteintrittsflächen 2 der Mikroprismen etwa 540 µm, so daß sich ein Verhältnis d:h von etwa 7:12 ergibt. In Fig. 11A ist beispielhaft ein einfallender Lichtstrahl 17 gezeigt, der unter einem flachen Einfallswinkel direkt an der Kante 5 auf die Lichteintrittsfläche 2 der Mikroprismenstruktur 1 trifft. Aufgrund der höheren Brechzahl n des transparenten Materials des optischen Elements wird der Lichtstrahl 17 zum Lot auf die Lichteintrittsfläche 2 hin gebrochen. Der gebrochene Lichtstrahl 17' läuft im Innern des Kerns des optischen Elements gerade an der Kante 6 zwischen den benachbarten Mikroprismen 1 vorbei und trifft auf die Lichtaustrittsfläche 3 bzw. in der Verlängerung auf die Lichtaustrittsfläche der Basisfläche. An der Lichtaustrittsfläche wird der Lichtstrahl 17' aufgrund der niedrigeren Brechzahl der Umgebung vom Lot auf die Lichtaustrittsfläche 3 weggebrochen. Der aus dem optischen Element austretende Lichtstrahl 17" hat einen Austrittswinkel γ, der größer als der maximal erwünschte Austrittswinkel γₘₐₓ von etwa 60° ist. Im Fall des herkömmlichen optischen Elements kann also eine Blendung für den Betrachter nicht vollständig ausgeschlossen werden.

Im Gegensatz zu dem herkömmlichen optischen Element von Fig. 11A sind in dem optischen Element gemäß der vorliegenden Erfindung von Fig. 11B Mikroprismenstrukturen 12, 13 sowohl mit konkav ausgebildeten Lichteintrittsflächen 14 als mit konvex ausgebildeten Lichteintrittsflächen 14 in einer Zeichnung dargestellt. Beispielhaft sind jeweils zwei Lichtstrahlen 18, die auf die Kanten der konkav ausgebildeten Lichteintrittsflächen 14 treffen, und zwei Lichtstrahlen 19, die auf die Kanten der konvex ausgebildeten Lichteintrittsflächen 14 treffen, gezeigt. Außerdem sind die Furchen 22 zwischen den Mikroprismen 12, 13 mit einer reflektierenden Abdeckung 20 versehen.

Die im Bereich der Kanten auf die konkav oder eingesenkt ausgebildete Lichteintrittsfläche 14 auftreffenden Lichtstrahlen 18 werden aufgrund des anderen Einfallswinkels auf die Lichteintrittsfläche im Vergleich zu dem in Fig. 11A gezeigten Strahlenverlauf stärker zum Lot auf die (gedachte) Ebene der Lichteintrittsfläche hin gebrochen, so daß die im Kern 11, 11', 11" des optischen Elements 10, 10', 10" verlaufenden Lichtstrahlen 18' unter einem steileren Winkel auf die Lichtaustrittsfläche 21 der Mikroprismen 12, 13 bzw. des Kerns 11, 11', 11" treffen. Diese Lichtstrahlen 18' werden zwar ebenfalls von dem Lot auf die Lichtaustrittsfläche 15 weggebrochen, ihr Austrittswinkel γ übersteigt aber in diesem Fall nicht den maximalen Austrittswinkel γₘₐₓ von 60°.

Eine konvexe oder erhabene Ausbildung der Lichteintrittsfläche 14 bewirkt hingegen, daß die im Bereich der Kanten auf die Lichteintrittsfläche 14 unter einem flachen Winkel auftreffenden Lichtstrahlen 19 im Vergleich zu dem in Fig. 11A gezeigten Strahlenverlauf weniger zum Lot auf die (gedachte) Ebene der Lichteintrittsfläche hin gebrochen werden, so daß die Lichtstrahlen 19' auf die Seitenflächen 16 der Mikroprismen 12, 13 treffen und an diesen totalreflektiert werden. Dies hat zur Folge, daß auch die Lichtstrahlen 19' im Vergleich zu dem in Fig. 11A gezeigten Strahlenverlauf unter einem steileren Winkel auf die Lichtaustrittsfläche 21 der Mikroprismen 12, 13 bzw. des Kerns 11, 11', 11" treffen und somit das optische Element unter einem ausreichend kleinen Austrittswinkel γ verlassen können (19").

## Patentansprüche

1. Optisches Element (10, 10', 10") in Form einer Leuchtenabdeckung zur Umlenkung von in dieses eintretenden und wieder aus diesem austretenden Lichtstrahlen (18, 19), derart, dass die Lichtstrahlen das optische Element (10, 10', 10") unter einem Austrittswinkel (γ) gegenüber dem Lot auf eine Lichtaustrittsfläche des optischen Elements (10, 10', 10") verlassen, der unterhalb eines vorgegebenen maximalen Austrittswinkels (γₘₐₓ) von etwa 70° liegt, wobei
a) das optische Element (10, 10', 10") einen plattenförmigen Kern (11, 11', 11") aus transparentem Material aufweist, der an einer Seite mit Mikroprismen (12, 13) besetzt ist, die sich unter Bildung von Furchen (22) - von ihrer Wurzel (15) ausgehend - verjüngen,
b) das optische Element (10, 10', 10") derart ausgestaltet ist, dass lediglich Licht, welches auf Lichteintrittsflächen (14) der Mikroprismen (12, 13) trifft, durch das optische Element (10, 10', 10") abgestrahlt wird, und
c) die Gesamtheit der Mikroprismen-Lichteintrittsflächen (14) die Lichteintrittsfläche des optischen Elements (10, 10', 10") und die andere Seite (21) des plattenförmigen Kerns (11, 11', 11") die Lichtaustrittsfläche des optischen Elements (10, 10', 10") bildet,
**dadurch gekennzeichnet,**
• **dass** die die Lichteintrittsfläche des optischen Elements (10, 10', 10") bildenden Mikroprismen-Lichteintrittsflächen (14) konvex oder konkav ausgebildet sind, und
• **dass** die Furchen (22) zwischen den benachbarten Mikroprismen (12, 13) reflektierend ausgebildet sind, so dass die Lichtstrahlen (18, 19) nur durch die Mikroprismen-Lichteintrittsflächen (14) in das optische Element (10, 10', 10") eintreten können.

2. Optisches Element nach Anspruch 1,
**dadurch gekennzeichnet,**
**dass** die Mikroprismen-Lichteintrittsflächen (14) konvex oder konkav gekrümmt sind.

3. Optisches Element nach Anspruch 1,
**dadurch gekennzeichnet,**
**dass** die konvexen oder konkaven Mikroprismen-Lichteintrittsflächen (14) aus mehreren Teilflächen gebildet sind.

4. Optisches Element nach einem der vorhergehenden Ansprüche,
**dadurch gekennzeichnet,**
**dass** die Seitenflächen (16) der Mikroprismen (12, 13) reflektierend ausgebildet sind, so dass das Licht nicht durch die Seitenflächen (16) aus den Mikroprismen austreten kann.

5. Optisches Element nach einem der vorherigen Ansprüche,
**dadurch gekennzeichnet,**
**dass** die Furchen (22) zwischen den benachbarten Mikroprismen (12, 13) mit einer Abdeckung (20) aus einem reflektierenden Material abgedeckt sind.

6. Optisches Element nach einem der vorherigen Ansprüche,
**dadurch gekennzeichnet,**
**dass** die Furchen (22) zwischen den benachbarten Mikroprismen (12, 13) mit einem reflektierenden Material aufgefüllt sind.

7. Verfahren zur Herstellung eines optischen Elements nach einem der Ansprüche 1 bis 6,
**dadurch gekennzeichnet,**
**dass** ein transparenter Block bereitgestellt und aus diesem transparenten Block der plattenförmige Kern (11, 11', 11") mit den Mikroprismen (12, 13) mechanisch herausgearbeitet wird.

8. Verfahren nach Anspruch 7,
**dadurch gekennzeichnet,**
**dass** die Bearbeitung des transparenten Blocks mittels Laserstrahlen erfolgt.

9. Verfahren zur Herstellung eines optischen Elements nach einem der Ansprüche 1 bis 6,
**dadurch gekennzeichnet,**
**dass** das optische Element (10, 10', 10") in einem Spritz-Prägeverfahren hergestellt wird, bei dem das transparente Material des Kerns (11, 11' ,11") zunächst in eine entsprechende Form gegossen oder eingespritzt und anschliessend mit Druck beaufschlagt wird.

## Claims

1. Optical element (10, 10', 10"), in the form of a luminaire cover, for deflecting light beams (18, 19), which enter and re-emerge therefrom, in such a way that the light beams leave the optical element (10, 10', 10") with an angle of emergence (γ) with respect to the vertical to a light emergence surface of the optical element (10, 10', 10") which is less than a predetermined maximum angle of emergence (γₘₐₓ) of about 70°, wherein
(a) the optical element (10, 10', 10") has a plate-like core (11, 11', 11") of transparent material which on one side is occupied by microprisms (12, 13) that taper - starting from their root (15) - forming furrows (22),
(b) the optical element (10, 10', 10") is so configured that only light which is incident upon the light entry surfaces (14) of the microprisms (12, 13) is emitted by the optical element (10, 10', 10"), and
(c) the entirety of the microprism light entry surfaces (14) forms the light entry surface of the optical element (10, 10', 10") and the other side (21) of the core (11, 11', 11") forms the light emergence surface of the optical element (10, 10', 10"),
**characterised in that**
• the microprism light entry surfaces (14) forming the light entry surface of the optical element (10, 10', 10") are formed convexly or concavely, and
• **in that** the furrows (22) between the adjacent microprisms (12, 13) are formed so as to be reflective so that the light beams (18, 19) can only enter the optical element (10, 10', 10") through the microprism light entry surfaces (14).

2. Optical element according to claim 1, **characterised in that** the microprism light entry surfaces (14) are curved convexly or concavely.

3. Optical element according to claim 1, **characterised in that** the convex or concave microprism light entry surfaces (14) are formed of a plurality of part surfaces.

4. Optical element according to any preceding claim, **characterised in that** the side faces (16) of the microprisms (12, 13) are formed so as to be reflective so that the light cannot emerge from the microprisms through the side faces (16).

5. Optical element according to any preceding claim, **characterised in that** the furrows (22) between the adjacent microprisms (12, 13) are covered with a cover (20) made of a reflective material.

6. Optical element according to any preceding claim, **characterised in that** the furrows (22) between the adjacent microprisms (12, 13) are filled with a reflective material.

7. Method for producing an optical element according to any of claims 1 to 6, **characterised in that** a transparent block is provided and the plate-like core (11, 11', 11") with the microprisms (12, 13) is mechanically worked from this transparent block.

8. Method according to claim 7, **characterised in that** the transparent block is worked by means of laser beams.

9. Method for producing an optical element according to any of claims 1 to 6, **characterised in that** the optical element (10, 10', 10") is produced in an injection embossing process in which transparent material of the core (11, 11', 11") is firstly cast or injected into an appropriate mould and subsequently pressure is applied thereto.

## Revendications

1. Elément optique (10, 10', 10") sous forme de couvercle de lampe pour dévier des rayons lumineux (18, 19) entrant dans celui-ci et ressortant de celui-ci de telle sorte que les rayons lumineux quittent l'élément optique (10, 10', 10") sous un angle de sortie (γ) par rapport à la verticale à une surface de sortie de lumière de l'élément optique (10, 10', 10") qui est situé au-dessous d'un angle de sortie maximal prédéfini (γₘₐₓ) d'environ 70°, dans lequel
a) l'élément optique (10, 10', 10") présente un noyau en forme de plaque (11, 11', 11 ") en matériau transparent qui est garni sur un côté de microprismes (12, 13) qui s'amincissent en formant des sillons en partant de leur racine (15),
b) l'élément optique (10, 10', 10") est configuré de telle sorte que seule la lumière qui atteint les surfaces d'entrée de lumière (14) des microprismes (12, 13) est émise par l'élément optique (10, 10', 10"), et
c) la totalité des surfaces d'entrée de lumière des microprismes (14) constitue la surface d'entrée de lumière de l'élément optique (10, 10', 10") et l'autre côté (21) du noyau en forme de plaque (11, 11', 11 ") constitue la surface de sortie de lumière de l'élément optique (10,10', 10"),
**caractérisé en ce que**
- les surfaces d'entrée de lumière des microprismes (14) constituant la surface d'entrée de lumière de l'élément optique (10, 10', 10") sont réalisées pour être convexes ou concaves, et
- les sillons (22) entre les microprismes adjacents (12, 13) sont réalisés pour être réfléchissants de sorte que les rayons lumineux (18, 19) peuvent seulement entrer dans l'élément optique (10, 10', 10") à travers les surfaces d'entrée de lumière des microprismes (14).

2. Elément optique selon la revendication 1, **caractérisé en ce que** les surfaces d'entrée de lumière des microprismes (14) sont courbées de façon convexe ou concave.

3. Elément optique selon la revendication 1, **caractérisé en ce que** les surfaces d'entrée de lumière des microprismes (14) convexes ou concaves sont formées par plusieurs surfaces partielles.

4. Elément optique selon l'une quelconque des revendications précédentes, **caractérisé en ce que** les surfaces latérales (16) des microprismes (12, 13) sont réalisées pour être réfléchissantes de sorte que la lumière ne peut pas sortir à travers les surfaces latérales (16) des microprismes.

5. Elément optique selon l'une quelconque des revendications précédentes, **caractérisé en ce que** les sillons (22) entre les microprismes adjacents (12, 13) sont recouverts par un couvercle (20) en matériau réfléchissant.

6. Elément optique selon l'une quelconque des revendications précédentes, **caractérisé en ce que** les sillons (22) entre les microprismes adjacents (12, 13) sont remplis avec un matériau réfléchissant.

7. Procédé de fabrication d'un élément optique selon l'une quelconque des revendications 1 à 6, **caractérisé en ce qu'**un bloc transparent est prévu, et **en ce qu'**à partir de ce bloc transparent, le noyau en forme de plaque (11, 11', 11") avec les microprismes (12, 13) est ébauché mécaniquement.

8. Procédé selon la revendication 7, **caractérisé en ce que** le façonnage du bloc transparent s'effectue au moyen de rayons laser.

9. Procédé de fabrication d'un élément optique selon l'une quelconque des revendications 1 à 6, **caractérisé en ce que** l'élément optique (10, 10', 10") est fabriqué au cours d'un procédé de moulage et matriçage dans lequel le matériau transparent du noyau (11, 11', 11") est d'abord coulé ou injecté dans un moule adéquat et ensuite mis sous pression.
